# EUROPEAN PATENT SPECIFICATION

(11) **EP 1 441 141 B1**
(45) Date of publication and mention of the grant of the patent: **30.11.2005**
(21) Application number: 04250340.9
(22) Date of filing: 22.01.2004
(51) Int. Cl.: F16D 65/097

(54) **Disc brake pad backplate assembly**
Scheibenbremsbelaghalterung
Fixation de garnitures de freins à disque

(30) Priority: 25.01.2003 GB 0301799
(43) Date of publication of application: 28.07.2004
(73) Proprietor: Meritor Heavy Vehicle Braking Systems (UK) Limited, Cwmbran, Gwent NP44 3XU (GB)
(72) Inventor: Thomas, Paul Anthony, Newport NP26 3AY (GB)
(74) Representative: Jones, John Bryn

(56) References cited:
- EP-A- 0 248 385
- EP-A- 0 694 707
- EP-A- 0 877 176
- WO-A-92/00465

## Description

The present invention relates to a disc brake pad backplate assembly. More particularly, the present invention relates to a disc brake pad backplate assembly comprising a backplate and a pad spring.

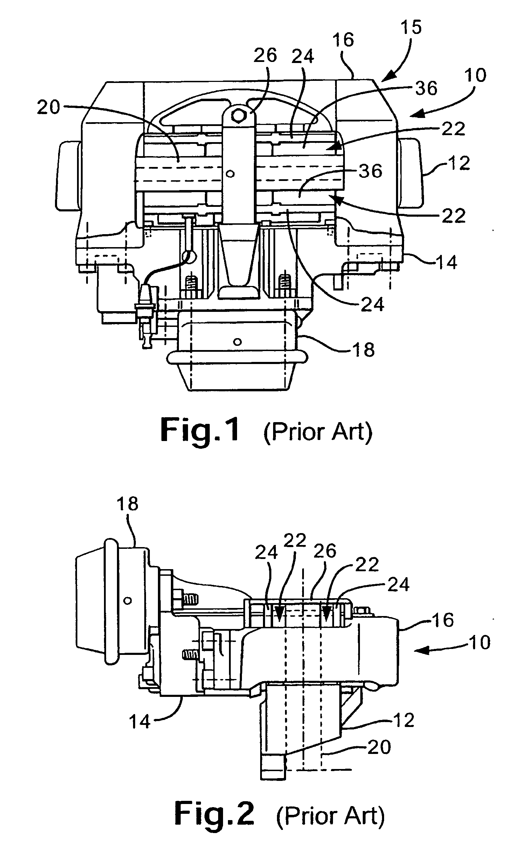

Known disc brakes (shown in Figures 1 to 3) comprise a disc or rotor 20 mounted to a wheel hub for rotation with a vehicle wheel. A brake carrier 12 is fixed relative to the axis of rotation of the rotor 20 and is secured to a non-rotating portion of the vehicle (eg the vehicle suspension). In "floating caliper" type brakes, a brake caliper comprising a bridge 16 secured to a housing 14 is slidably mounted on the carrier 12 to allow for movement parallel to the axis of rotation of the rotor 20. An actuator 18 communicates with one or more pistons or tappets (not shown) provided in housing 14 to apply the force required for the brake to function.

A pair of brake pads 22 comprising friction material 36 mounted to a solid backplate 34 are positioned either side of the rotor 20 with the friction material facing the planar faces of the rotor. The backplates 34 of the pads 22 are seated on vertical and horizontal abutment regions 28 and 30 respectively provided in openings 32 of the carrier 12 to restrain the pads 22 from rotational and radially inward movement respectively. In a typical floating caliper type brake, one of the backplates 34 engages with the piston(s), either directly or via a spreader plate to distribute the load. Braking is achieved by the actuator causing the piston to push one of the pads 22 towards the rotor 20. Because the caliper is able to "float" on the carrier, this causes an equal frictional braking load to be applied by both pads.

Backplates 34 of vehicle disc brakes pads 22 essentially perform two functions: they provide a solid support for slidably mounting the friction material 36 of the brake within the brake carrier in such a way to transmit sheer loads induced on the friction material during braking to the carrier, and they transmit and distribute the pressure applied by brake tappets or pistons during braking evenly to the surface of the friction material to ensure even wear of the friction material over its surface. In order to perform the former of these two functions it is common for resilient means such as a leaf type pad springs 24 to restrain radially outward movement of the pads in the carrier whilst permitting movement towards and away from an associated brake disc and to prevent rattling of the pad in use.

Pad springs 24 are typically elongate and extend along a proportion of the radially outermost face of a brake pad backplate 34 when fitted. Pad springs 24 are typically pre-loaded to a certain extent against the carrier by a pad strap 26 which spans an opening between the bridge 16 and housing 14 and that contacts the approximate centre of the spring. This force is typically reacted radially outwardly by contact with the backplate proximate each end of the spring. Formations are also typically provided on the backplate and/or the pad spring to retain the pad spring on the backplate during movement of the pad 22 parallel to the axis of rotation of rotor 14.

One example of a prior art backplate 34 and pad spring 24 is shown in Figure 3 and is the subject of EP 0248385 (Lucas Industries PLC). It can be seen that the backplate 34 comprises circumferentially inward facing abutment portions 40 on its radially outer face that retain ends 42 of the pad spring 24 that are curved inwardly. The spring 24 is held down by a pad strap 26 at a central portion 48 of the spring. Radially inward projecting ears 46 provided intermediate the ends 42 and central portion 48 of the spring 24 retain the spring on the backplate 12 during sliding of the backplate towards and away from the rotor 20. As the pad spring 24 is restrained at its ends, radially inward deflection of the central portion 48 may only occur as a result of elastic buckling of the pad spring (ie portions of the pad spring 24 intermediate the ends 42 and centre 48 must deflect radially outwardly as the centre deflects radially inwardly). As such, the pad spring has a high spring rate (a high load per unit deflection of the central portion 48 of spring 18 radially inwardly). This is advantageous in as much as the tendency of the backplate 12 to rattle within the carrier, which generates noise and wear, is reduced. However, the force required to slide the backplate 12 towards the brake disc is increased, resulting in a relatively high load being required to slide the backplate towards the rotor, and for an increased load being needed to allow the caliper to slide relative to the carrier.

WO 92/00465 (Knorr-Bremse), on the other hand, discloses a backplate assembly whose pad spring has circumferentially unrestrained ends. That is to say, under load the centre of the pad spring abuts the radially outer face of the backplate before the circumferentially inner edges of the securement apertures abut the securement lugs. The raised portions proximate each end of the pad spring fail to restrain the curved ends of the pad spring because of their respective shapes and the spacing therebetween. This arrangement reduces the slide load, but increases the risk of noise and wear being generated due to increased rattling of the assembly in use.

The present invention seeks to overcome, or at least mitigate the problems of the prior art.

According to an aspect of the present invention there is provided a disc brake pad backplate assembly including a backplate and pad spring, the backplate and/or pad spring comprising retaining means to mount the pad spring to the backplate and circumferentially spaced abutments arranged so as to be capable of restraining lateral movement of the end portions of the pad spring, the pad spring being dimensioned relative to the spacing of the abutments such that a radially inward loading applied at a central portion of the spring causes the spring to function in a first resilient leaf spring-like mode in which the pad spring end portions are unrestrained up to a predetermined load limit, and such that above the predetermined load limit, the end portions are restrained by the abutments such that the pad spring functions in a second buckling mode, the spring rate being relatively low in the first mode and relatively high in the second mode.

Embodiments of the present invention will now be described, by way of example only, with reference to the accompanying drawings in which:
FIGURE 1 is a plan view of a disc brake incorporating a prior art disc brake pad backplate assembly;
FIGURE 2 is an end view of the disc brake of Figure 1;
FIGURE 3 is an elevational view of a portion of the carrier and one prior art disc pad and pad spring of Figures 1 and 2;
FIGURE 4 is a plan view of a backplate assembly according to embodiment of the present invention;
FIGURE 5 is a cross-sectional view of Figure 4 along the axis X-X;
FIGURE 5A is a cross-sectional view of the circled portion of Figure 5 showing one end of the pad spring abutting its corresponding abutment; and
FIGURE 6 is a graph illustrating the load-deflection characteristics of the backplate assembly of the present invention in comparison with prior art backplate assemblies.

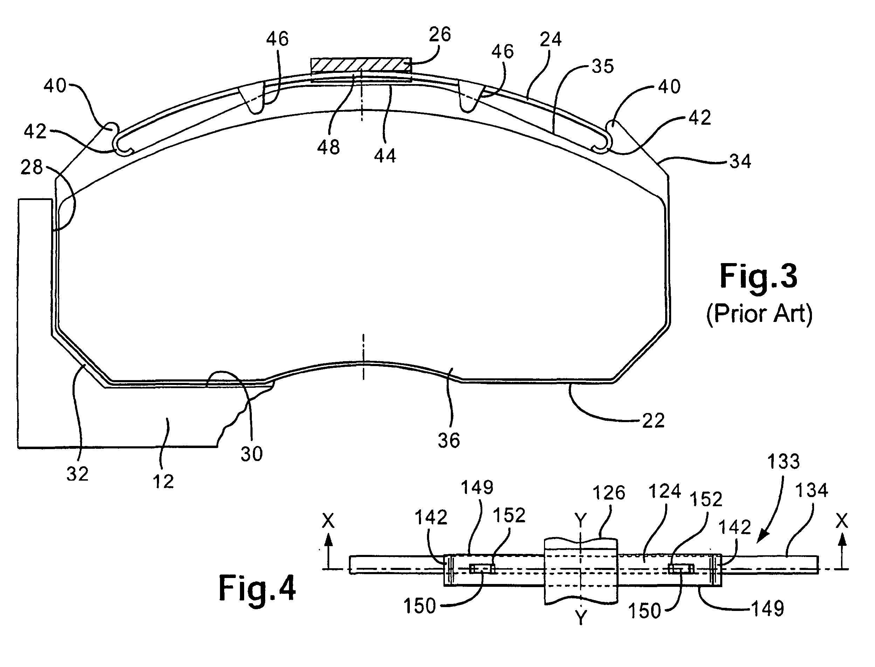

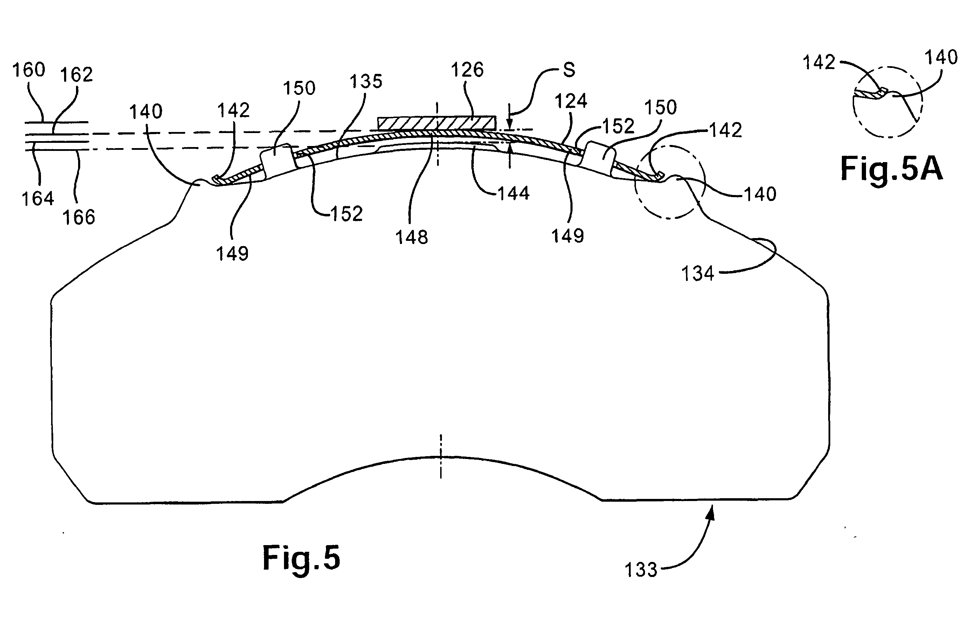

Figures 4 and 5 show a disc brake pad backplate assembly 133 according to one embodiment of the present invention. The assembly 133 is capable of being fitted into a prior art disc brake 10 as described above. The assembly 133 comprises a backplate 134 to which friction material (not shown) is secured. The backplate comprises a pair of circumferentially spaced abutments 140 on the radially outer face 135 thereof. Pad spring retaining means, such as pair of radially outwardly extending lugs 150 also project from the radially outer face 135 of the backplate 134 and are located between abutments 140.

As can be seen from Figure 4, pad spring 124 is elongate having a central region 148 and end regions 149. When fitted to the backplate 134, the pad spring 124 extends in the circumferential direction transverse to the axis of movement of the backplate 134 Y-Y towards and away from rotor 20 when in use. The spring is provided with upturned ends 142 and two of slots 152 positioned at end regions 149 such that lugs 150 may fit therethrough. The abutments 140 on backplate 134 are shaped such that the upturned ends 142 of the pad spring are prevented from sliding over them.

A pad strap 126 holds down the central portion 148 of the pad spring 124 as is well known.

Prior to fitting the pad spring 124 onto lugs 150, the spring has an arcuate profile with a shorter radius of curvature than is shown in Figure 5. To fit the pad spring 124 to the backplate, it must be compressed by a certain amount for the slots 152 to fit over both lugs 150. Once fitted, a certain amount of relaxation occurs such that the circumferentially outermost edge of slots 152 contact the radially outermost face of lugs 150, thereby retaining the spring on the backplate 134 prior to the mounting of the assembly 133 in the brake 10. In other embodiments, the lugs 150 may not perform this circumferential retaining function. The height of central portion 148 when fitted is represented by line 160.

In Figure 5 the backplate assembly 133 is shown in its assembled state on disc brake 10 with pad strap 126 in place. It should be noted that the pad strap 126 depresses the central portion 148 of the spring 124 such that the circumferentially outermost edges of slots 152 no longer contact lugs 150, but a space between these circumferentially innermost edges of holes 152 and the lugs 150 remains. This assembled state corresponds to line 162 in which there is a distance S between the pad strap 126 and outer face 135 of the backplate.

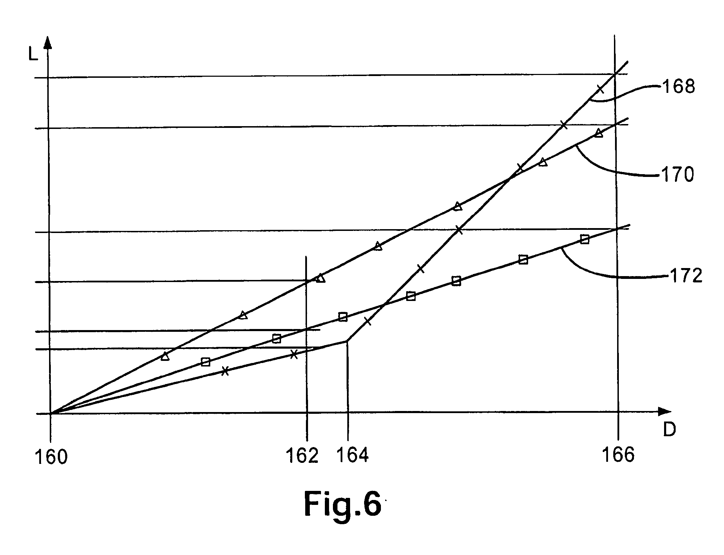

Referring to Figure 6, the load-deflection characteristics of the pad spring 124 are shown as line 168, the load-deflection characteristics of a pad spring with restrained ends (eg the assembly of EP 0248385) are shown by line 170 and the characteristics of a spring with unrestrained ends (eg the assembly of WO 92/00465) are illustrated by line 172. The load and deflection of each spring when fitted to their respective backplate, but not assembled in the brake (ie at line 160) are taken as the datum. From zero load and deflection position 160 up until the assembled deflection 162, the spring rate of the spring 124 is relatively low.

When the backplate 134 is subjected to radially outward accelerative loads due to, for example, a vehicle to which the backplate is fitted travelling over uneven terrain, the loads cause the distance S between the strap 126 and central region 144 of the backplate to decrease. In turn, this causes the spring 124 to straighten along its length and the ends 142 thereof to slide circumferentially outwardly up until they come into contact with abutments 140. This constitutes a first "leaf spring" mode of operation of the pad spring 124 which is similar to the mode of operation of the prior art backplate assembly disclosed in WO 92/00465. At this point deflection 164 is reached.

Thereafter, further deflections towards the radially outermost face 135 of the backplate up to position 166 have a significantly higher spring rate due to spring 124 entering a second elastic "buckling" mode of deflection in which the central portion 148 continues to straighten, but the portions intermediate the central portion and the ends are forced to curve away from radially outer face 135.

It will be apparent that operation using the above two modes provides for low slide load of the back plate against the carrier and of the caliper relative to carrier under normal operation, but increased loads to minimise rattling when the backplate is subjected to high radial accelerations, thus minimising noise and wear of both the backplate 134 and abutment portions 28 and 30 of the carrier 12. This can be contrasted with the prior art springs which, as in the case of line 170 have an increased sliding force requirement at the fitted deflection 162 and with line 172 which has a low spring rate at more extreme deflections that in turn may lead to increased wear and noise.

It should be understood that numerous changes may be made within the scope of the present invention. For example, alternative means of securing the pad spring to the backplate may be employed, as may other suitable shapes of the pad spring end and abutment (eg such as inwardly curved or straight ends). The circumferential restraint need not occur at the extreme ends of the spring. For example the abutments for providing circumferential restraint may be the circumferential inner faces of the lugs which restrain the circumferentially inner edges of the slots. The change over from the first to the second mode may be varied by altering the length of the spring relative to the spacing of the abutments.

## Claims

1. A disc brake pad backplate assembly (133) including a backplate (134) and pad spring (124), the backplate and/or pad spring comprising retaining means (150) to mount the pad spring to the backplate and circumferentially spaced abutments (140) arranged so as to be capable of restraining lateral movement of end portions (142) of the pad spring, the pad spring being dimensioned relative to the spacing of the abutments such that a radially inward loading applied at a central portion (148) of the spring causes the spring to function in a first resilient leaf spring-like mode in which the pad spring end portions are unrestrained up to a predetermined load limit, and such that above the predetermined load limit, the end portions are restrained by the abutments such that the pad spring functions in a second buckling mode, the spring rate being relatively low in the first mode and relatively high in the second mode.

2. A backplate assembly according to claim 1 wherein the pad spring has radially outwardly curved ends (142).

3. A backplate assembly according to claim 2 wherein the backplate has complementary curved abutment surfaces.

4. A backplate assembly according to any preceding claim wherein the retaining means comprises lugs (150).

5. A backplate assembly according to claim 4 wherein the lugs extend radially outwardly from the backplate.

6. A backplate assembly according to claim 4 or claim 5 wherein complementary apertures (152) are provided in the pad spring through which the lugs may fit.

7. A backplate assembly according to claim 6 wherein the lugs act as the abutments.

8. A backplate assembly according to any preceding claim wherein the pad spring has a curved profile.

9. A disc brake (10) incorporating a backplate assembly according to any preceding claim.

10. A disc brake according to claim 8 wherein the pad spring is retained by a pad strap (126).

11. A vehicle incorporating a disc brake according to claim 9 or claim 10.

## Patentansprüche

1. Grundplattenbaugruppe (133) für einen Scheibenbremsklotz, mit einer Grundplatte (134) und einer Bremsklotzfeder (124), wobei die Grundplatte und/oder Bremsklotzfeder Befestigungsmittel (150) zum Befestigen der Bremsklotzfeder an der Grundplatte und am Umfang im Abstand voneinander angeordnete Anschläge (140) umfasst/umfassen, die so angeordnet sind, dass sie eine Seitwärtsbewegung der Endabschnitte (142) der Bremsklotzfeder einschränken können, wobei die Bremsklotzfeder im Verhältnis zum Abstand der Anschläge so dimensioniert ist, dass eine auf einen mittleren Abschnitt (148) der Feder ausgeübte radial nach innen gerichtete Kraft dazu führt, dass die Feder in einem ersten Modus in der Art einer elastischen Blattfeder arbeitet, in dem die Endabschnitte der Bremsklotzfeder bis zu einer vorbestimmten Lastgrenze keiner Einschränkung unterliegen, und dass die Endabschnitte über der vorbestimmten Lastgrenze durch die Anschläge eingeschränkt werden, so dass die Bremsklotzfeder in einem zweiten Knickmodus arbeitet, wobei die Federkonstante in dem ersten Modus relativ niedrig und in dem zweiten Modus relativ hoch ist.

2. Grundplattenbaugruppe nach Anspruch 1, bei der die Bremsklotzfeder radial nach außen gebogene Enden (142) aufweist.

3. Grundplattenbaugruppe nach Anspruch 2, bei der die Grundplatte komplementäre gebogene Anschlagflächen aufweist.

4. Grundplattenbaugruppe nach einem der vorhergehenden Ansprüche, bei der die Befestigungsmittel Ansätze (150) umfassen.

5. Grundplattenbaugruppe nach Anspruch 4, bei der sich die Ansätze von der Grundplatte radial nach außen erstrecken.

6. Grundplattenbaugruppe nach Anspruch 4 oder Anspruch 5, bei der komplementäre Öffnungen (152) in der Bremsklotzfeder vorgesehen sind, durch die die Ansätze passen können.

7. Grundplattenbaugruppe nach Anspruch 6, bei der die Ansätze als Anschläge wirken.

8. Grundplattenbaugruppe nach einem der vorhergehenden Ansprüche, bei der die Bremsklotzfeder ein gebogenes Profil hat.

9. Scheibenbremse (10) mit einer Grundplattenbaugruppe nach einem der vorhergehenden Ansprüche.

10. Scheibenbremse nach Anspruch 8, bei der die Bremsklotzfeder durch einen Bremsklotzriemen (126) festgehalten wird.

11. Fahrzeug mit einer Scheibenbremse nach Anspruch 9 oder Anspruch 10.

## Revendications

1. Ensemble de plaque support de plaquette de frein à disque (133) comprenant une plaque support (134) et un ressort de plaquette (124), la plaque support et / ou le ressort de plaquette comprenant des moyens de retenue (150) pour monter le ressort de plaquette sur la plaque support et des butées espacées de manière circonférentielle (140), disposées afin d'empêcher un déplacement latéral des parties d'extrémité (142) du ressort de plaquette, le ressort de plaquette étant dimensionné par rapport à l'espacement des butées, de telle sorte qu'une charge vers l'intérieur de manière radiale appliquée au niveau de la partie centrale (148) du ressort, fasse fonctionner le ressort dans un premier mode élastique semblable à un ressort à lames, dans lequel les parties d'extrémité du ressort de plaquette sont non limitées jusqu'à une limite de charge prédéterminée, et de telle sorte qu'au-dessus de la limite de charge prédéterminée, les parties d'extrémité soient retenues par les butées, de telle sorte que le ressort de plaquette fonctionne dans un second mode de gauchissement, la constante de rappel étant relativement faible dans le premier mode et relativement élevée dans le second mode.

2. Ensemble de plaque support selon la revendication 1, dans lequel le ressort de plaquette possède des extrémités incurvées vers l'extérieur de manière radiale (142).

3. Ensemble de plaque support selon la revendication 2, dans lequel la plaque support possède des surfaces de butée incurvées complémentaires.

4. Ensemble de plaque support selon l'une quelconque des revendications précédentes, dans lequel les moyens de retenue comprennent des pattes (150).

5. Ensemble de plaque support selon la revendication 4, dans lequel les pattes s'étendent vers l'extérieur de manière radiale à partir de la plaque support.

6. Ensemble de plaque support selon l'une quelconque des revendications 4 ou 5, dans lequel des ouvertures complémentaires (152) sont prévues dans le ressort de plaquette à travers lesquelles les pattes peuvent s'ajuster.

7. Ensemble de plaque support selon la revendication 6, dans lequel les pattes font office de butées.

8. Ensemble de plaque support selon l'une quelconque des revendications précédentes, dans lequel le ressort de plaquette présente un profile incurvé.

9. Frein à disque (10) comprenant un ensemble de plaque support, selon l'une quelconque des revendications précédentes.

10. Frein à disque selon la revendication 8, dans lequel le ressort de plaquette est maintenu par une bride de plaquette (126).

11. Véhicule comprenant un frein à disque, selon l'une quelconque des revendications 9 ou 10.
